# EUROPEAN PATENT APPLICATION

(11) **EP 0 571 719 A1**
(43) Date of publication of application: **01.12.1993**
(21) Application number: 93103421.9
(22) Date of filing: 03.03.1993
(51) Int. Cl.: A01G 9/12

(54) **Brace for suspending a cluster of vegetables or fruits**

(30) Priority: 28.05.1992 IL 102033
(71) Applicant: PASKAL AVIZAREY KSHIRA Ltd., Migdal Tefen 24959 (IL)
(72) Inventor: Ben-Dror, Michael, Merom Hagalil 13855 (IL)
(74) Representative: VOSSIUS & PARTNER

(57) **Abstract**

An integrally molded plastic brace (1) for suspending a cluster of vegetables or fruits from a trellising string, comprises:
flexible shank (2) provided at one end with a hook (3) adapted to engage the stem of the cluster, and at its other end with a pair of parallel prongs (5,5') extending backwards from said other end of the shank, each prong being separated from the shank by a wedge-shaped slot (7,7') tapering towards said other end of the shank;
wherein the distal portions (8,8') of said prongs are bent away from the shank in the same direction and are each provided on its surface facing the shank with a ratch (9,9') adapted to retain a string inserted between the prongs and the shank;
the end of the shank carrying the prong terminates in a flat, slightly tapering tongue (10) and the mid-portion of the shank is of reduced thickness so as to enable it both to bend and to twist easily under mild torsion, for which purpose a flat handle (12) is provided at about the middle of the shank.

## Description

This invention concerns a brace for suspending a cluster of vegetables or fruit, such as tomatoes, from a plant trellising string. Whenever reference is made herein to a cluster of vegetables or fruits, it should be understood that the description could equally refer to a single fruit or vegetable.

Breaking of the stems of the clusters of vegetables or fruit, especially at the top part thereof, is a well-known phenomenon, especially in vegetables growing in green-houses, such as tomatoes, and ripening during the winter (lack of light), the clusters of which tend to reach considerable size and weight. Various methods have been used by growers to minimize the damage caused by this breaking of stems. For example, office-type rubber bands or special plastic devices have been used for suspending the clusters from a higher branch of the plant or from the plant trellising strings. These existing devices are unsatisfactory owing to their complex and inefficient installation, their sliding on the string, and the serious damage they cause to the plant.

It is thus the object of the present invention to provide a reliable, easy to install brace for suspending a stem of a cluster of vegetables or fruit from a trellising string, which would cause only minimum damage to the plant.

The above object is attained by the present invention which provides a brace for suspending a cluster of vegetables or fruits from a trellising string, said brace being integrally molded of a semi-rigid polymer, and comprising:
a flexible shank provided at a first end thereof with a hook adapted to accommodate and support the stem of the cluster, the free end of the hook being tapered and curling outwardly;
wherein the second end portion of the shank is slightly arcuate, and is provided with a pair of parallel prongs of substantially rectangular cross-section, connected to the said second end of the shank and extending therefrom backwards in the direction of the shank's first end, each prong being separated from the second end portion of the shank by a wedge-shaped slot tapering towards said second end of the shank;
wherein the distal portions of said prongs are bent away from the shank in the same direction and are each provided on its surface facing the shank with a ratch adapted to retain the string after its insertion between the prongs and the shank;
the second end of the shank terminating in a flat, slightly tapering tongue, one surface of which being aligned with the surfaces of the prongs which do not carry said ratches;
the mid-portion of the shank being of reduced thickness so as to enable it both to bend and to twist easily under mild torsion, for which purpose a flat handle is provided at about the middle of the shank.

The brace, according to the invention, can be inexpensively fabricated by injection molding of a suitable semi-rigid polymer material, e.g. polyethylene or polypropylene.

An embodiment of the invention will now be described in more detail with the aid of the accompanying non-limiting drawings in which:
**Fig. 1** is a front view of the brace according to the invention; and
**Fig. 2** is a side view of the brace of Fig. 1 when viewed from the direction of arrow "A" in Fig. 1.

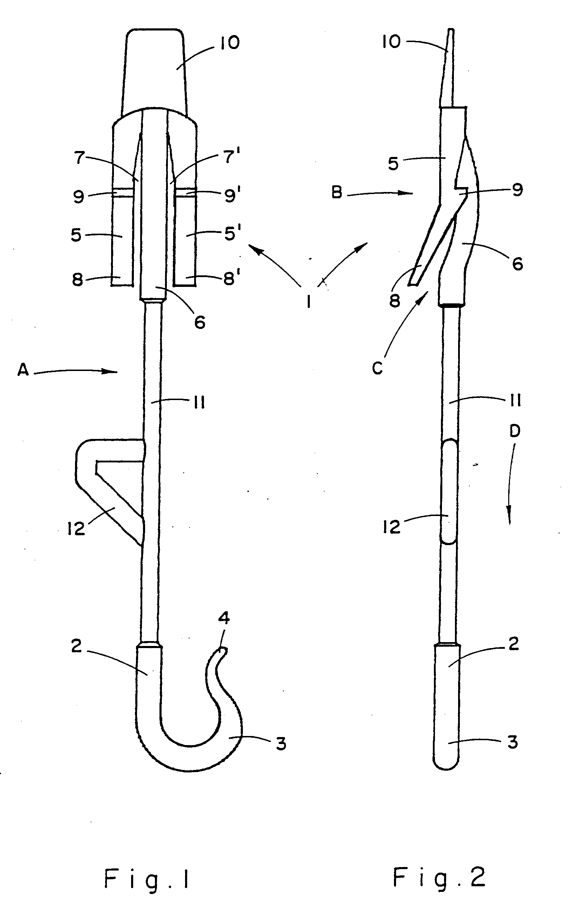

As seen in Fig. 1, the brace, generally referenced as 1, comprises a cylindrical shank 2, one end of which being formed as a hook 3 with an outwardly curling tapered end 4. At the other end of the shank there are connected a pair of parallel prongs 5, 5' extending backwards from said end in the direction of the hook-shaped other end. The end portion 6 of the shank between the prongs 5, 5' is slightly arcuate so as to ease the insertion of the string into the slots 7, 7' which are provided between the arcuate portion 6 of the shank and the prongs 5, 5'. These slots 7, 7' are wedge-shaped, tapering towards the end of the shank and providing for secure holding of the string when the brace 1 is forced against it by the weight of the cluster of the vegetables or fruit hanging from the hook 3.

As seen in Fig. 2, the distal portions 8, 8' of the prongs 5, 5' are both bent away in the same direction from the shank portion 6, being also formed with a wedge-like profile for easy guidance of the string into the gap between these end portions 8, 8' and the shank's end portion 6. At about the angle between the bent away portions 8, 8' of the prongs 5, 5' and the portions which are parallel to the shank, each prong 5, 5' is provided with a ratch 9, 9' in order to block the string within the slots 7, 7' once it had passed over these ratches 9, 9'.

The end of shank 2 at the point joining with the prongs 5, 5' is provided with an outwardly extending flat, thin tongue 10, one surface of which being aligned with the surfaces of the prongs 5, 5' which do not carry the ratches 9, 9' (Fig. 2). The function of the tongue 10 will be explained hereinbelow.

The mid portion 11 of the shank 2 is preferably of reduced thickness and serves as a torsion hinge enabling the hook 3 to be twisted by about 90° from its original position. To assist in this twisting, there is provided at about the middle of the shank 2 a flat handle 12, similar to a cup handle. This handle 12, which may alternatively be solid, also contributes to a convenient holding of the brace by hand.

The use of the brace according to the invention will now be explained, by way of example, in connection with plants having vertical stems, such as tomato plants, supported by substantially vertical trellising strings which are tightly wound around the plant stems. It should be noted that as the fruit matures and reaches considerable weight, the trellising string is subjected to a significant tension. In order to install the brace according to the invention, the side of the brace marked by the arrow "B" in Fig. 2 is contacted with the stem of the plant and the trellising string which is wound around it, the shank 2 being held substantially normal to the string. The brace is advanced so as to bring the string roughly in front of the gap between the end portion 6 of the shank and the bent-out portions 8, 8' of the prongs 5, 5', whereafter the brace is pulled in the direction of the arrow "D" in Fig. 2 whereby the string advances in the direction of the arrow "C" in Fig. 2, enters the aforementioned gap and is pulled over the ratches 9, 9' into the inner ends of the slots 7, 7'. The mid portion 11 of the shank 2 is then twisted by means of the handle 12 and the hook 3 is made to engage the stem of the cluster of vegetables or fruit which is to be suspended.

Once the brace according to the invention is installed, in the above-mentioned example, the weight of the cluster causes the upper part of the brace to assume an orientation of about 45° in respect of the string while the hook 3 is oriented downwards. This position of the brace causes the string to twist where it passes through the brace, the upper part of this portion of the string being secured in the wedge-like end of the slot 7 (or 7') while the lower part of the string portion is engaged by the ratch 9 (or 9'. This position of the brace assures the reliable holding of the string and prevents sliding of the brace along the string.

In the above-described position of the installed brace, the tongue 10 ensures that this end of the brace will always be positioned flat against the surface of the stem of the plant and prevents the brace from assuming an orientation perpendicular to the plant's stem, which is apt to cause serious wounds to the plant's stem upon even slight swaying motion.

## Claims

1. A brace (1) for suspending a cluster of vegetables or fruits from a trellising string, said brace (1) being integrally molded of a semi-rigid polymer, and comprising:
a flexible shank (2) provided at a first end thereof with a hook (3) adapted to accommodate and support the stem of the cluster, the free end (4) of the hook being tapered and curling outwardly;
wherein the second end portion of the shank (2) is slightly arcuate, and is provided with a pair of parallel prongs (5, 5') of substantially rectangular cross-section, connected to the said second end of the shank (2) and extending therefrom backwards in the direction of the shank's first end, each prong (5, 5') being separated from the second end portion of the shank (2) by a wedge-shaped slot (7, 7') tapering towards said second end of the shank (2);
wherein the distal portions (8, 8') of said prongs (5, 5') are bent away from the shank (2) in the same direction and are each provided on its surface facing the shank (2) with a ratch (9, 9') adapted to retain the string after its insertion between the prongs (5, 5') and the shank (2);
the second end of the shank (2) terminating in a flat, slightly tapering tongue (10), one surface of which being aligned with the surfaces of the prongs (5, 5') which do not carry said ratches (9, 9');
the mid-portion of the shank (2) being of reduced thickness so as to enable it both to bend and to twist easily under mild torsion, for which purpose a flat handle (12) is provided at about the middle of the shank (2).
